# EUROPÄISCHE PATENTANMELDUNG

(11) **EP 4 461 904 A1**
(43) Veröffentlichungstag der Anmeldung: **13.11.2024**
(21) Anmeldenummer: 24174344.2
(22) Anmeldetag: 06.05.2024
(51) Int. Cl.: E04G 9/10, B28B 7/34, B29C 44/00, B32B 5/02, B32B 27/12, B32B 27/40, E04F 21/04, E04G 9/02, G06K 19/07, H04B 1/59

(54) **MATRIZE ZUR STRUKTURIERUNG VON BAUWERKSFLÄCHEN**

(30) Priorität: 10.05.2023 DE 102023112230
(71) Anmelder: Reckli GmbH, 44628 Herne (DE)
(72) Erfinder: DELKLOCK, Andreas, 45739 Oer-Erkenschwick (DE); KOSJAK, Sven, 45731 Waltrop (DE); HAMMER, Lutz, 44653 Herne (DE)
(74) Vertreter: Moser Götze & Partner Patentanwälte mbB

(57) **Zusammenfassung**

Eine Matrize (1) zur Strukturierung von Bauwerksflächen hat eine Strukturierungsschicht (2), mittels der eine Bauwerksfläche mit einer dreidimensionalen Struktur ausgestaltbar ist, und eine Kleberschicht (5), die zwischen der Strukturierungsschicht (2) der Matrize (1) und einem Stützteil (6), z.B. einer Trägerplatte, einem Schalungsgrund oder einem Produktionstisch, angeordnet und mittels der die Matrize (1) mit dem Stützteil (6) verbindbar ist. Um nach dem bestimmungsgemäßen Gebrauch der Matrize (1) deren Entsorgung sowie ggf. die Entsorgung des Stützteils (6) mit einem geringeren Aufwand durchführen zu können, wird vorgeschlagen, dass die Matrize (1) eine Innenkleberschicht (3), die zwischen der Strukturierungsschicht (2) und der Kleberschicht (5) der Matrize (1) angeordnet ist, und ein Trennvlies (4) aufweist, das zwischen der Innenkleberschicht (3) und der Kleberschicht (5) der Matrize (1) angeordnet ist.

## Beschreibung

Die Erfindung bezieht sich auf eine Matrize zur Strukturierung von Bauwerksflächen, mit einer Strukturierungsschicht, mittels der eine Bauwerksfläche mit einer dreidimensionalen Struktur ausgestaltbar ist, und einer Kleberschicht, die zwischen der Strukturierungsschicht der Matrize und einem Stützteil, z.B. einer Trägerplatte, einem Schalungsgrund oder einem Produktionstisch angeordnet und mittels der die Matrize mit dem Stützteil verbindbar ist.

Derartige Matrizen kommen zum Einsatz, um beispielsweise große Außenflächen von Bauwerken aller Art mit einer ästhetischen Gestaltung zu versehen. Hierzu können solche Matrizen mehrfach eingesetzt werden. Beim Einsatz derartiger Matrizen wird eine auf der Außenseite der Strukturierungsschicht vorgesehene dreidimensionale Struktur mit Erhebungen und Vertiefungen auf eine Bauwerksfläche übertragen, wobei die Erhebungen und Vertiefungen entsprechend Vertiefungen bzw. Erhebungen an der Bauwerksfläche zur Folge haben.

Nach dem betrieblichen Einsatz der Matrize zur Strukturierung von Bauwerksflächen wird diese üblicherweise der Entsorgung zugeführt. Hierbei treten insoweit Nachteile auf, als vergleichsweise häufig Matrize und Stützteil gemeinsam entsorgt werden, wobei diese aus entsprechend dem jeweiligen Anforderungsprofil unterschiedlichen und bei der Entsorgung auch unterschiedlich zu behandelnden Werkstoffen bestehen.

Ausgehend von dem vorstehend geschilderten Stand der Technik liegt der Erfindung die Aufgabe zugrunde, eine Matrize zur Strukturierung von Bauwerksflächen zur Verfügung zu stellen, die nach ihrem bestimmungsgemäßen Gebrauch mit einem deutlich geringeren technisch-konstruktiven Aufwand entsorgt werden kann.

Diese Aufgabe wird erfindungsgemäß dadurch gelöst, dass die Matrize eine Innenkleberschicht, die zwischen der Strukturierungsschicht und der Kleberschicht der Matrize angeordnet ist, und ein Trennvlies aufweist, das zwischen der Innenkleberschicht und der Kleberschicht der Matrize angeordnet ist. Nach dem bestimmungsgemäßen Gebrauch der Matrize zur Strukturierung von Bauwerksflächen ist es in einfacher Weise möglich, die Matrize mit ihrer Strukturierungsschicht vom Stützteil zu lösen, da das im Falle der erfindungsgemäßen Matrize vorgesehene Trennvlies in einfacher Weise ein Lösen der Strukturierungsschicht der Matrize vom Stützteil ermöglicht. Die Matrize und das Stützteil können somit nach ihrer Trennung separat entsorgt werden, wodurch sich der gesamte Entsorgungsaufwand reduziert, da jedes der beiden Teile hinsichtlich seiner werkstoffmäßigen Zusammensetzung separat behandelt werden kann. Selbstverständlich ist es auch möglich, das Stützteil, nachdem die Matrize zur Strukturierung von Bauwerksflächen bzw. deren Strukturierungsschicht vom Stützteil getrennt ist, erneut mit einer Matrize zur Strukturierung von Bauwerksflächen zu versehen, die dann mit demselben Stützteil eingesetzt werden kann.

Vorteilhaft ist die Strukturierungsschicht der Matrize aus einem geeigneten Polyurethanwerkstoff ausgebildet, der die Möglichkeit eröffnet, die Strukturierungsschicht auf ihrer Außenseite mit einem vergleichsweise geringen technisch-konstruktiven Aufwand mit einer dreidimensionalen Struktur zu versehen, wobei darüber hinaus diese dreidimensionale Struktur während des Betriebseinsatzes der Matrize dauerhaft ist.

Die Kleberschicht der Matrize kann aus einem geeigneten Polyurethanklebstoff ausgebildet sein.

Dasselbe gilt für die Innenkleberschicht der Matrize, wobei dann aufgrund der Ähnlichkeit zwischen dem Werkstoff der Strukturierungsschicht und dem der Innenkleberschicht die Entsorgung weiter vereinfacht werden kann.

Um beim Betriebseinsatz der erfindungsgemäßen Matrize zur Strukturierung von Bauwerksflächen Zugriff auf Produktionsdaten und/oder andere Parameter der Matrize zu ermöglichen, ist es vorteilhaft, wenn an der Matrize ein RFID-Chip angebracht ist, mittel dem derartige Produktionsdaten und Parameter auslesbar sind.

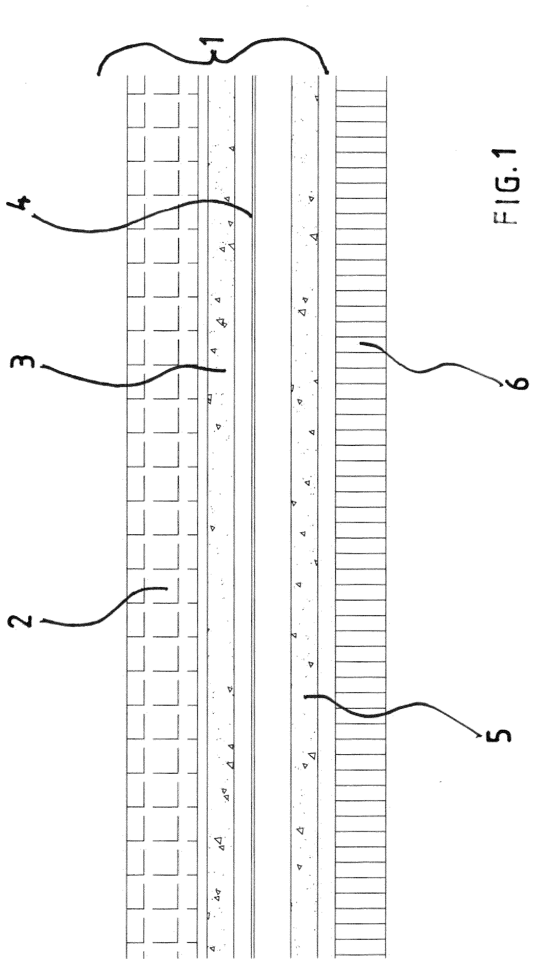

Im Folgenden wird die Erfindung anhand einer Ausführungsform unter Bezugnahme auf die Zeichnung näher erläutert, deren einzige Figur 1 eine Ausführungsform einer erfindungsgemäßen Matrize zur Strukturierung von Bauwerksflächen prinzipiell darstellt.

Zu einer in Figur 1 in einer Explosionsdarstellung gezeigten Schnittansicht einer Ausführungsform einer erfindungsgemäßen Matrize 1 gehört zunächst eine Strukturierungsschicht 2. Die Strukturierungsschicht 2 ist an ihrer in Figur 1 oberen bzw. Außenseite bzw. in ihrem in Figur 1 oberen Bereich mit einer dreidimensionalen Struktur versehen, deren Erhebungen bzw. Vertiefungen als Vertiefungen bzw. Erhebungen auf eine mittels der Matrize 1 auszugestaltende Bauwerksfläche übertragbar sind. Entsprechend kann eine Bauwerksfläche mittels der Matrize 1 bzw. deren Strukturierungsschicht 2 quasi in beliebiger Weise mit einer dreidimensionalen Struktur ausgestaltet werden.

Die Strukturierungsschicht 2 der Matrize 1 kann aus einem geeigneten Polyurethanwerkstoff ausgestaltet werden. Derartige Werkstoffe sind besonders geeignet, um die für die Strukturierungsschicht 2 gewünschten dreidimensionalen Strukturen herzustellen, wobei diese hergestellten dreidimensionalen Strukturen bei Einsatz der Matrize 1 mit ihrer Strukturierungsschicht 2 dauerhaft, d.h. für viele Strukturierungsvorgänge, nutzbar sind.

Im Falle der in Figur 1 gezeigten Ausführungsform der Matrize 1 ist unterhalb der Strukturierungsschicht 2 eine Innenkleberschicht 3 der Matrize 1 vorgesehen. Diese Innenkleberschicht 3 ist aus einem geeigneten Polyurethanklebstoff ausgebildet, mittels dem die Innenkleberschicht 3 fest mit der Unterseite der Strukturierungsschicht 2 verbindbar ist.

An der Unterseite der Innenkleberschicht 3 ist die Matrize 1 in der in Figur 1 gezeigten Ausführungsform mit einem Trennvlies 4 versehen. Das Trennvlies 4 sitzt zwischen der Unterseite der Innenkleberschicht 3 und der Oberseite einer weiteren Kleberschicht 5 der Matrize 1, wobei diese Kleberschicht 5 ebenfalls aus einem geeigneten Polyurethanklebstoff ausgebildet ist.

Wenn die vorstehend geschilderte Matrize 1 zur Strukturierung von Bauwerksflächen zum Einsatz kommt, wird die Matrize 1 mittels der Kleberschicht 5 mit einem Stützteil 6 verbunden. Bei dem Stützteil kann es sich um eine Trägerplatte, einen Schalungsgrund, einen Produktionstisch od.dgl. handeln. Zum Beispiel kann das Stützteil 6 aus einem geeigneten Holzwerkstoff ausgebildet sein.

Nach dem betrieblichen Einsatz der Matrize 1 zur Strukturierung von Bauwerksflächen, während dem eine Vielzahl von Strukturierungsvorgängen an unterschiedlichen Flächenabschnitten der Bauwerksfläche durchgeführt werden kann, kann die Strukturierungsschicht 2 der Matrize in einfacher Weise vom Stützteil 6 abgetrennt werden, da aufgrund des Vorhandenseins des Trennvlies 4 zwischen der Innenkleberschicht 3 der Matrize 1 und der Kleberschicht 5 der Matrize 1 die Strukturierungsschicht 2 und die Innenkleberschicht 3 in einfacher Weise von der Kleberschicht 5, die fest mit dem Stützteil 6 verbunden ist, gelöst werden kann. Nach bestimmungsgemäßem Gebrauch der Matrize 1 kann diese somit in schonender Weise entsorgt werden, da sowohl die Strukturierungsschicht 2 als auch die Innenkleberschicht 3 aus gemeinsam bei der Entsorgung behandelbaren Werkstoffen bestehen. Des Weiteren ist es ohne Weiteres möglich, das Stützteil 6 erneut zu verwenden. Alternativ ist auch die Entsorgung des Stützteils 6 mit einem geringeren technisch-konstruktiven Aufwand realisierbar.

Um während des Einsatzes zur Strukturierung von Bauwerksflächen Zugriff auf Daten zur Qualität und anderen Eigenschaften der Matrize 1 zu gewähren, ist es möglich, die Matrize 1 mit einem RFID-Chip zu versehen, der in geeigneter Weise an der Matrize 1 angebracht ist, so dass Produktionsdaten und ggf. weitere Parameter der Matrize 1 ausgelesen werden können.

## Patentansprüche

1. Matrize zur Strukturierung von Bauwerksflächen, mit einer Strukturierungsschicht (2), mittels der eine Bauwerksfläche mit einer dreidimensionalen Struktur ausgestaltbar ist, und einer Kleberschicht (5), die zwischen der Strukturierungsschicht (2) der Matrize (1) und einem Stützteil (6), z.B. einer Trägerplatte, einem Schalungsgrund oder einem Produktionstisch angeordnet und mittels der die Matrize (1) mit dem Stützteil (6) verbindbar ist, **dadurch gekennzeichnet, dass** die Matrize (1) eine Innenkleberschicht, die zwischen der Strukturierungsschicht (2) und der Kleberschicht (5) der Matrize (1) angeordnet ist, und ein Trennvlies (4) aufweist, das zwischen der Innenkleberschicht (3) und der Kleberschicht (5) der Matrize (1) angeordnet ist.

2. Matrize nach Anspruch 1, deren Strukturierungsschicht (2) aus einem geeigneten Polyurethanwerkstoff ausgebildet ist.

3. Matrize nach Anspruch 1 oder 2, deren Kleberschicht (5) aus einem geeigneten Polyurethanklebstoff ausgebildet ist.

4. Matrize nach einem der Ansprüche 1 bis 3, deren Innenkleberschicht (3) aus einem geeigneten Polyurethanklebstoff ausgebildet ist.

5. Matrize nach einem der Ansprüche 1 bis 4, an der ein RFID-Chip angebracht ist, mittels dem Produktionsdaten und/oder andere Parameter der Matrize (1) auslesbar sind.
